# EUROPÄISCHE PATENTSCHRIFT

(11) **EP 3 390 857 B1**
(45) Veröffentlichungstag und Bekanntmachung des Hinweises auf die Patenterteilung: **18.03.2020**
(21) Anmeldenummer: 16809053.8
(22) Anmeldetag: 09.12.2016
(51) Int. Cl.: F16F 9/04, B60G 13/00, B60G 15/12

(54) **LUFTFEDERANSCHLUSSVORRICHTUNGSABDICHTUNG**
AIR SPRING CONNECTING DEVICE SEAL
ÉTANCHÉIFICATION DE DISPOSITIF DE RACCORDEMENT DE RESSORT PNEUMATIQUE

(30) Priorität: 18.12.2015 DE 102015226044
(43) Veröffentlichungstag der Anmeldung: 24.10.2018
(73) Patentinhaber: ThyssenKrupp Bilstein GmbH, 58256 Ennepetal (DE); thyssenkrupp AG, 45143 Essen (DE)
(72) Erfinder: PRIESS, Jens, 46117 Oberhausen (DE); BECKER, Matthias, 58730 Fröndenberg (DE)
(74) Vertreter: thyssenkrupp Intellectual Property GmbH
(86) Internationale Anmeldenummer: PCT/EP2016/080442
(87) Internationale Veröffentlichungsnummer: WO 2017/102584

(56) Entgegenhaltungen:
- EP-A1- 1 475 255
- DE-A1-102012 012 902
- DE-A1-102012 210 388

## Beschreibung

Die vorliegende Erfindung betrifft eine Luftfederanschlussvorrichtung zur Lagerung eines Luftfederbeins an einem Fahrzeug und ein Verfahren zum Herstellen einer Luftfederanschlussvorrichtung zur Lagerung eines Luftfederbeins an einem Fahrzeug.

### Stand der Technik

Luftfedern sind im Stand der Technik in einer Vielzahl von Ausführungsformen bekannt. Für die Luftfederung eingesetzte Luftfedern basieren auf einem Federungssystem, das die Kompressibilität von Gasen, insbesondere von atmosphärischer Luft ausnutzt und auch als Volumenfederung bekannt ist. Bei der Volumenfederung beruht die Federwirkung auf Volumen und damit auf der Druckänderung des federnden Mediums, wie beispielsweise von Luft bei einer Luftfederung. Das federnde Medium ist von einem Behältnis, insbesondere einem Federbalg eingeschlossen, wobei durch von außen einwirkende fahrdynamische Kräfte, wie beispielsweise einem Einfedern eines Rades das Gas komprimiert wird, womit sich eine Volumenänderung ergibt. Somit erfolgt die Luftfederung insbesondere mittels Luftbälgen, in denen Druckluft bei schwankendem Druck die Gegenkraft zu den fahrdynamischen Kräften am jeweiligen Rad oder der Achse bildet. Des Weiteren kann mittels Luftfederung auch die Fahrzeughöhe variabel eingestellt werden und beispielsweise auch über Niveauregelungsventile der Druck in den Federn so geregelt werden, dass die Wagenhöhe unabhängig von der Belastung konstant bleibt. Bei Luftmangel senkt sich der Fahrzeugkasten auf eingebaute mechanische Notlauffedern. Ein Austausch von Luftfedern ist materialintensiv und zeitaufwendig. Zudem ist die Einstellung der Federcharakteristik, wie beispielsweise die Federrate konventioneller Luftfedern sehr aufwendig beziehungsweise nachträglich nur sehr zeit- und kostenaufwendig veränderbar. Damit die Luftfederung nicht negativ durch Druckluftverluste beeinflusst wird und das Luftvolumen in der Luftfeder konstant zur Verfügung steht, ist eine sichere und dauerhaft luftdichte Abdichtung einzelner Luftfederkomponenten notwendig. Problematisch ist dies insbesondere bei Anschlusskomponenten von Luftfedern. Hierzu werden beispielsweise luftwirktechnisch in Verbindung stehende Luftfederkomponenten miteinander verklebt, insbesondere vulkanisiert oder durch Membranen abgedichtet. Somit können einzelne Komponenten einer Luftfeder nur mit sehr kostenintensiven und unter großem Zeitaufwand ausgetauscht werden.

Aus der EP 1 402 195 A1 ist eine Luftfederanordnung mit einem Luftfederbalg und einem Stoßdämpfer bekannt. Die DE 10 2012 210 388 A1 offenbart eine Luftfederanschlussvorrichtung und wird als nächstliegender Stand der Technik betrachtet.

Der vorliegenden Erfindung liegt daher die Aufgabe zugrunde, eine verbesserte Luftfederanschlussvorrichtung zur Lagerung eines Luftfederbeins an einem Fahrzeug und ein verbessertes Verfahren zum Herstellen einer Luftfederanschlussvorrichtung zur Lagerung eines Luftfederbeins an einem Fahrzeug bereitzustellen, bei welchem die zuvor genannten Nachteile vermieden werden. Insbesondere soll mit dieser verbesserten Luftfederanschlussvorrichtung eine Alternativlösung zu bekannten Luftfederanschlussvorrichtungen zur Verfügung gestellt werden. Des Weiteren soll mit dieser Luftfederanschlussvorrichtung ein einfaches, schnelleres und zuverlässiges Anbringen von Luftfederbeinen an einem Fahrzeug gewährleistet sein. Zudem soll mit dem verbesserten Verfahren zum Herstellen einer Luftfederanschlussvorrichtung zur Lagerung eines Luftfederbeins an einem Fahrzeug ein stabiler, beschädigungsunanfälligerer, vereinfachter und variantenreicher Herstellungsprozess zur Verfügung gestellt werden.

### Offenbarung der Erfindung

Diese Aufgabe wird mit einer Luftfederanschlussvorrichtung nach Anspruch 1 und einem Verfahren zum Herstellen einer Luftfederanschlussvorrichtung nach Anspruch 5 gelöst.

Die erfindungsgemäße Luftfederanschlussvorrichtung weist gegenüber konventionellen Luftfederanschlussvorrichtungen den Vorteil auf, dass ein Kopflager mit einem Luftfederstützlager wieder lösbar verbunden ist und damit eine kurzfristige Kombination/en unterschiedlicher Kopflager mit unterschiedlichen Luftfederstützlagern möglich ist. Hierdurch sind viele Variationsmöglichkeiten kurzfristig möglich. Zudem kann ein flexibles Baukastensystem realisiert und mit einer Vielzahl an Kombinationsmöglichkeiten mit einem oder mehreren Kopflager(n) mit dem/n Luftfederstützlager(n) unzählige Varianten an Luftfedern zur Verfügung gestellt werden. Des Weiteren ist ein modularer Austausch von Einzelkomponenten der Luftfederanschlussvorrichtung schnell und einfach möglich. Zudem kann eine Standardisierung einzelner Komponenten, wie beispielsweise des Kopflagers oder Luftfederstützlagers, realisiert werden. Ein weiterer Vorteil ist die Integration der Dichtebene in das Kopflager, wobei eine Abdichtung auch mit einer geringen Anzahl von Dichtelementen, insbesondere einem Dichtelement möglich ist.

Das erfindungsgemäße Verfahren zum Herstellen einer Luftfederanschlussvorrichtung weist gegenüber konventionellen Verfahren den Vorteil auf, dass die kurzfristige Kombinationsmöglichkeit von Kopflagern mit Luftfederstützlagern und die Standardisierungsmöglichkeit von Einzelmodulen möglich ist und dass das Verfahren im Vergleich zum Stand der Technik variabler, flexibler und ggf. einheitlicher gestaltet und erst ermöglicht wird. Somit ist mit dem erfindungsgemäßen Verfahren ein modulares Baukastensystem mit einer Vielzahl an Kombinations- und Variationsmöglichkeiten darstellbar. Ein weiterer Vorteil ist, dass die Integration der Dichtebene in das Kopflager erfolgt, wobei eine Abdichtung auch mit einer geringen Anzahl von Dichtelementen, insbesondere einem Dichtelement durchgeführt werden kann.

Gegenstand der Erfindung ist daher eine Luftfederanschlussvorrichtung gemäß Anspruch 1.

Ein weiterer Gegenstand der Erfindung ist ein Verfahren zum Herstellen einer Luftfederanschlussvorrichtung zur Lagerung eines Luftfederbeins an einem Fahrzeug, gemäß Anspruch 5.

Ein weiterer Gegenstand der Erfindung ist die Verwendung einer Luftfederanschlussvorrichtung nach einem der Ansprüche 1 bis 4 zur Lagerung eines Luftfederbeins an einem Fahrzeug, insbesondere als Schwingungsdämpfer, Niveauregler oder Kombination hiervon, umfassend
- ein Luftfederstützlager mit einer Kopflageraufnahme,
- ein Kopflager mit wenigstens einer zylindrischen Mantelfläche,
- eine Kolbenstange, wobei die Kolbenstange axial durch das Kopflager hindurch geführt und gegenüber dem Kopflager luftdicht abgedichtet ist,
wobei das Kopflager in einer koaxial zu der Kolbenstange angeordneten Kopflageraufnahme des Luftfederstützlagers angeordnet ist und zwischen der Kopflageraufnahme des Luftfederstützlagers und dem Kopflager eine luftdichte Verbindung ausgebildet ist, wobei in dem Bereich der Kopflageraufnahme zwischen dem Luftfederstützlager und dem Kopflager mindestens ein Pressverbindungselement in direktem Kontakt mit der Kopflageraufnahme des Luftfederstützlagers und dem Kopflager angeordnet ist und mindestens ein Dichtelement angeordnet ist.

### Detaillierte Beschreibung der Erfindung

Im Rahmen der vorliegenden Erfindung wird unter einer Luftfederanschlussvorrichtung eine Vorrichtung verstanden, welche ein Luftfederbein wenigstens wirktechnisch mit der abzufedernden Last, insbesondere einer Fahrzeugkarosserie oder einer Achse des Fahrzeugs verbindet.

Unter einem Luftfederbein wird im Rahmen der vorliegenden Erfindung ein System zur Dämpfung von mechanischen Schwingungen, wie beispielsweise Vibrationen, Erschütterungen, Stößen und Kombinationen hiervon verstanden. Insbesondere wird bei mit einer mechanischen Schwingung beaufschlagten Schwingungsdämpfern Bewegungsenergie, insbesondere Schwingungsenergie in Wärmeenergie umgewandelt. Im Bereich der Fahrzeugtechnik finden Schwingungsdämpfer insbesondere in Fahrwerken von Kraftfahrzeugen Einsatz und werden üblicherweise als (Fahrzeug)Stoßdämpfer bezeichnet. Diese (Fahrzeug)Stoßdämpfer arbeiten frequenzunabhängig und benötigen ein "ruhendes" Gegenstück, wie beispielsweise eine Karosserie und werden insbesondere auch als Reibungsbremsen bezeichnet. Beispielsweise umfasst ein Luftfederbein ein System aus einem Stoßdämpferelement und einem Luftfederelement. Die Funktionsweise von Luftfederelementen basiert auf einem Federungssystem, das die Kompressibilität von Gasen, insbesondere von atmosphärischer Luft ausnutzt und auch als Volumenfederung bezeichnet wird. Bei der Volumenfederung beruht die Federwirkung auf Volumen und damit auf der Druckänderung des federnden Mediums, wie beispielsweise von Luft bei einer Luftfederung. Das federnde Medium ist von einem Behältnis, insbesondere einem Federbalg eingeschlossen, wobei durch von außen einwirkende fahrdynamische Kräfte, wie beispielsweise einem Einfedern eines Rades das Gas komprimiert wird, womit sich eine Volumenänderung ergibt. Somit erfolgt die Luftfederung insbesondere mittels Luftbälgen, in denen Druckluft beim schwankendem Druck die Gegenkraft zu den fahrdynamischen Kräften am jeweiligen Rad oder der Achse bildet.

Im Rahmen der vorliegenden Erfindung wird unter einem Luftfederstützlager ein Stützlager verstanden, welches wirktechnisch mit der abzufedernden Last, insbesondere einer Fahrzeugkarosserie oder einer Achse des Fahrzeugs verbindbar ist und ein Kopflager aufnehmen kann.

Unter einem Kopflager wird im Rahmen der vorliegenden Erfindung ein kopfseitig zu einem Stoßdämpferelement und/oder einem Luftfederelement angeordnetes Lager verstanden. Beispielsweise kann von einem Kopflager eine Kolbenstange aufgenommen, insbesondere die Kolbenstange in dem Kopflager fixierend angeordnet werden.

Unter luftdicht abgedichtet wird im Rahmen der vorliegenden Erfindung ein für Luft undurchlässig machen verstanden. Insbesondere wird unter luftdicht abgedichtet eine luftdichte Isolation eines Druckluft enthaltenden Bereiches, wie beispielsweise eines Behältnisses der Luftfederanschlussvorrichtung gegenüber der Umgebungsluft verstanden. Beispielsweise wird ein Luftfederinnenraum gegenüber der Umgebungsluft abgedichtet.

Im Rahmen der vorliegenden Erfindung wird unter einem Pressverbindungselement ein Element zur Herstellung von Übermaßpassungen verstanden. Insbesondere kann mit einem Pressverbindungselement, welches mit einem Gegenelement gepaart ist, eine wenigstens kraftschlüssige Fügeverbindung hergestellt werden. Beispielsweise ist eine Übermaßpassung eine Verbindung zweier Teile, welche sich die Reibung zwischen diesen beiden Teilen zu Nutzen macht. Dabei kann zum Beispiel die thermische Ausdehnung der Materialien dieser Teile ausgenutzt werden. Die meisten Materialien dehnen sich aus, wenn sie erhitzt werden. So können zwei Teile, die gekühlt worden sind und so zusammengesetzt wurden, nach dem Annehmen der Raumtemperatur fest zusammenhängen, da sie sich durch das Ausdehnen fest verkeilt haben. Beispiele für Pressverbindungselemente sind ausgewählt aus einer Gruppe von Pressringen, Presshülsen und Kombinationen hiervon.

Unter einem Dichtelement im Rahmen der vorliegenden Erfindung wird ein Element verstanden, welches eine wenigstens luftdichte Verbindung zwischen dem Luftfederstützlager, insbesondere der Kopflageraufnahme und dem Kopflager herstellt und ist insbesondere aus im Stand der Technik bekannten statischen Dichtungen ausgewählt, deren Dichtelemente keinen Relativbewegungen, wie beispielsweise einer Abdichtung einer rotierenden Welle gegenüber einem statischen Gehäuse, ausgesetzt sind. Erfindungsgemäße Dichtungen sind beispielsweise ausgewählt aus der Gruppe von Flachdichtungen, Profildichtungen, Muffendichtungen, Dichtungsmassen, Dichtringen, insbesondere O-Ringen, Gummidichtringen, Kautschukdichtringen, Polymerdichtringen und Kombinationen hiervon.

In einer weiteren Ausführungsform der Erfindung ist/sind das mindestens eine Pressverbindungselement und/oder das mindestens eine Dichtelement in dem Bereich der zylindrischen Mantelfläche der Kopflageraufnahme der Luftfederanschlussvorrichtung angeordnet.

In einer bevorzugten Ausführungsform der Erfindung weist das mindestens eine Pressverbindungselement mindestens eine Dichtelementaufnahme, insbesondere eine Dichtelementaussparung auf und ist das mindestens eine Dichtelement an der mindestens einen Dichtelementaufnahme angeordnet.

Gemäß einer weiteren Ausführungsform der Erfindung ist das mindestens eine Dichtelement nicht in direktem Kontakt zu dem Kopflager angeordnet. Beispielsweise ist das mindestens eine Dichtelement in direktem Kontakt mit dem mindestens einen Pressverbindungselement, wobei das Pressverbindungselement in direktem Kontakt mit der Kopflageraufnahme des Luftfederstützlagers steht.

Erfindungsgemäß bildet das mindestens eine Dichtelement eine stoffschlüssige Verbindung mit dem Kopflager aus und ist/sind als eine oder mehrere Dichtlippe(n) des Kopflagers ausgebildet.

In einer weiteren Ausführungsform der Erfindung ist das mindestens eine Dichtelement auf der der Luftfeder zugewandten Seite des Pressverbindungselements in koaxialer Richtung zu der Kolbenstange angeordnet.

In einer bevorzugten Ausführungsform der Erfindung ist das Pressverbindungselement als eine Presspassung mit einem Übermaß von größer als 0,05 mm, vorzugsweise größer als 0,1 mm, besonders bevorzugt größer als 0,15 mm, ganz besonders bevorzugt größer als 0,2 mm ausbildet.

Gemäß einer bevorzugten Ausführungsform der Erfindung ist die in wenigstens einem Bereich zwischen der Kopflageraufnahme und dem Kopflager ausgebildete luftdichte Verbindung eine wieder lösbare Verbindung. Beispiele für eine wieder lösbare Verbindung sind nicht stoffschlüssige Verbindungen. Insbesondere können dies Klemm- und/oder Steckverbindungen sein.

Nach einer bevorzugten Ausführungsform der Erfindung ist die Kolbenstange als ein Kolbenstangenrohr ausgebildet. Insbesondere ist ein Zugang zu einem Innenbereich eines Schwingungsdämpfers möglich.

In einer weiteren bevorzugten Ausführungsform der Erfindung weist das Kolbenstangenrohr einen Kabelschacht auf. Beispielsweise kann innerhalb des Kabelschachtes ein Kabel zur elektrischen Dämpfkraftverstellung eines Schwingungsdämpfers angeordnet sein/werden.

Nach einer weiteren Ausführungsform der Erfindung wird/werden das in Schritt d) bereitgestellte mindestens eine Pressverbindungselement und/oder das in Schritt e) bereitgestellte mindestens eine Dichtelement in dem Bereich der zylindrischen Mantelfläche der Kopflageraufnahme des Luftfederstützlagers angeordnet.

In einer weiteren Ausführungsform der Erfindung weist das in Schritt d) bereitgestellte mindestens eine Pressverbindungselement mindestens eine Dichtelementaufnahme, insbesondere eine Dichtelementaussparung auf und wird das in Schritt e) bereitgestellte mindestens eine Dichtelement an der mindestens einen Dichtelementaufnahme angeordnet. Insbesondere kann die Dichtelementaussparung als eine Nut, insbesondere eine Ringnut ausgebildet sein.

Gemäß einer weiteren Ausführungsform der Erfindung wird das in Schritt e) bereitgestellte mindestens eine Dichtelement nicht in direktem Kontakt zu dem Kopflager angeordnet. Beispielsweise wird das mindestens eine Dichtelement in direktem Kontakt mit dem mindestens einen Pressverbindungselement angeordnet, wobei das Pressverbindungselement in direktem Kontakt mit der Kopflageraufnahme des Luftfederstützlagers steht.

Nach einer weiteren Ausführungsform der Erfindung wird/werden das in Schritt e) bereitgestellte mindestens eine Dichtelement als eine stoffschlüssige Verbindung mit dem Kopflager ausgebildet und ist/wird als eine oder mehrere Dichtlippe(n) des Kopflagers ausgebildet. Insbesondere wird das mindestens eine Dichtelement einstückig mit dem Kopflager ausgebildet.

Erfindungsgemäß wird das in Schritt e) bereitgestellte mindestens eine Dichtelement auf der der Luftfeder zugewandten Seite des Pressverbindungselements in koaxialer Richtung zu der Kolbenstange angeordnet.

Gemäß einer bevorzugten Ausführungsform der Erfindung wird das in Schritt d) bereitgestellte Pressverbindungselement als eine Presspassung mit einem Übermaß von größer als 0,05 mm, vorzugsweise größer als 0,1 mm, besonders bevorzugt größer als 0,15 mm, ganz besonders bevorzugt größer als 0,2 mm ausbildet.

In einer weiteren Ausführungsform der Erfindung wird das Verbinden in Schritt c) wenigstens in einem Bereich zwischen der Kopflageraufnahme und dem Kopflager ausgebildet und als eine wieder lösbare Verbindung durchgeführt. Beispiele für eine wieder lösbare Verbindung sind nicht stoffschlüssige Verbindungen. Insbesondere können dies Klemm- und/oder Steckverbindungen sein.

In einer bevorzugten Ausführungsform der Erfindung wird die Kolbenstange des in Schritt b) bereitgestellten Kopflagers als ein Kolbenstangenrohr ausgebildet. Insbesondere ist ein Zugang zu einem Innenbereich eines Schwingungsdämpfers möglich.

Nach einer weiteren bevorzugten Ausführungsform der Erfindung wird die Kolbenstange des in Schritt b) bereitgestellten Kopflagers als ein Kolbenstangenrohr ausgebildet, wobei das Kolbenstangenrohr mit einem Kabelschacht bereitgestellt wird.

### Kurze Beschreibung der Zeichnungen

Die erfindungsgemäße Luftfederanschlussvorrichtung zur Lagerung eines Luftfederbeins an einem Fahrzeug wird anhand der Zeichnungen erläutert.
- Fig. 1: zeigt schematisch einen Längsschnitt einer nich-erfindungsgemäßen Luftfederanschlussvorrichtung,
- Fig. 2: zeigt schematisch einen Längsschnitt einer Luftfederanschlussvorrichtung nach Fig. 1 mit einer an dem Kopflager ausgebildeten Dichtlippe gemäß einer Ausführungsform der Erfindung,
- Fig. 3: zeigt schematisch einen Längsschnitt einer Luftfederanschlussvorrichtung nach Fig. 2 mit zwei an dem Kopflager ausgebildeten Dichtlippen gemäß einer Ausführungsform der Erfindung.

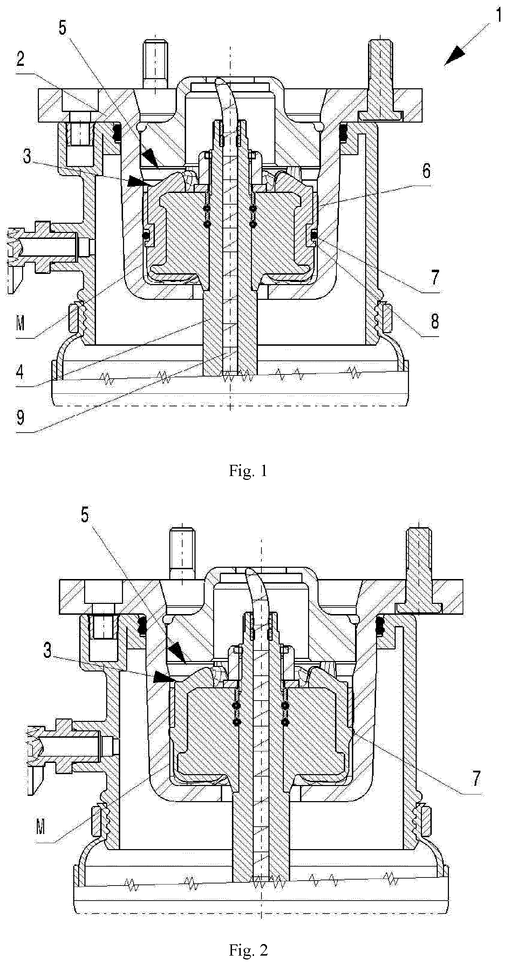

In der Fig. 1 ist ein Längsschnitt einer Luftfederanschlussvorrichtung 1, umfassend ein Luftfederstützlager 2 zur Verbindung mit einer abzufedernden Last, insbesondere einer Fahrzeugkarosserie oder einer Achse des Fahrzeugs, ein Kopflager 3 und eine Kolbenstange 4 gemäß einer Ausführungsform der Erfindung dargestellt. Das Luftfederstützlager 2 weist eine Kopflageraufnahme 5 auf, in welcher das Kopflager 3 angeordnet ist. Die Kopflageraufnahme 5 ist mit einer Mantelfläche M dargestellt. Die Kolbenstange 4 ist axial durch das Kopflager 3 hindurchgeführt und mit Dichtelementen luftdicht gegenüber dem Kopflager 3 abgedichtet. Zwischen dem Luftfederstützlager 2 und dem Kopflager 3 ist ein Pressverbindungselement 6 angeordnet. Das Pressverbindungselement 6 bildet eine Presspassung zwischen dem Luftfederstützlager 2 und dem Kopflager 3 aus. Auf der der abzufedernden Last, insbesondere einer Fahrzeugkarosserie oder einer Achse des Fahrzeugs abgewandten Seite ist ein Dichtelement 7 koaxial zu der Kolbenstange 4 angeordnet. Das Pressverbindungselement 6 weist eine Dichtelementaufnahme 8 auf, in welcher das Dichtelement 7 angeordnet. Das Dichtelement 7 dichtet das Kopflager 3 gegenüber dem Luftfederstützlager 2 luftdicht ab. Die Kolbenstange 4 ist als ein Kolbenstangenrohr ausgeführt mit einem Kabelschacht 9. Durch den Kabelschacht 9 ist ein Kabel, insbesondere zur elektrischen Dämpfkraftverstellung, geführt.

In der Fig. 2 ist ein Längsschnitt der Luftfederanschlussvorrichtung 1 nach Fig. 1 mit dem Dichtelement 7 mit der Kontur einer Dichtlippe dargestellt. Die Dichtlippe ist an dem Kopflager 3 angeordnet dargestellt. Das Dichtelement 7 ist mit der Dichtlippe in direktem Kontakt mit der Mantelfläche M der Kopflageraufnahme 5, wobei das Dichtelement 7 das Kopflager 3 gegenüber dem Luftfederstützlager 2 luftdicht abdichtet.

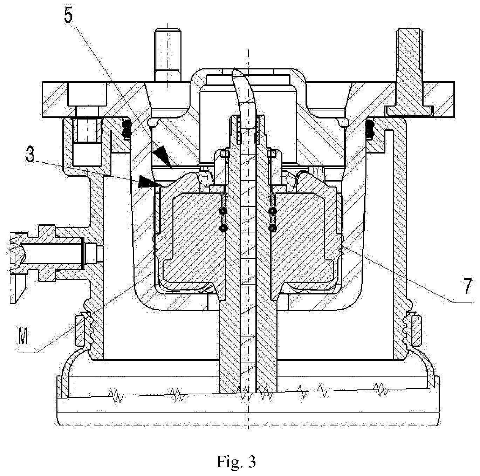

In der Fig. 3 ist ein Längsschnitt der Luftfederanschlussvorrichtung 1 nach Fig. 2 dargestellt. Das an dem Kopflager 3 angeordnete Dichtelement 7 ist mit der Kontur von zwei Dichtlippen dargestellt. Das Dichtelement 7 ist mit den zwei Dichtlippen in direktem Kontakt mit der Mantelfläche M der Kopflageraufnahme 5, wobei das Dichtelement 7 das Kopflager 3 gegenüber dem Luftfederstützlager 2 luftdicht abdichtet.

### Gewerbliche Anwendbarkeit

Luftfederanschlussvorrichtungen zur Lagerung eines Luftfederbeins an einem Fahrzeug sowie ein Verfahren zum Herstellen einer Luftfederanschlussvorrichtung zur Lagerung eines Luftfederbeins an einem Fahrzeug der vorbeschriebenen Art werden in der Produktion von Fahrzeugen, insbesondere von Fahrwerken von Kraftfahrzeugen eingesetzt.

### Bezugszeichenliste

- 1: = Luftfederanschlussvorrichtung
- 2: = Luftfederstützlager
- 3: = Kopflager
- 4: = Kolbenstange
- 5: = Kopflageraufnahme
- 6: = Pressverbindungselement(e)
- 7: = Dichtelement(e)
- 8: = Dichtelementaufnahme(n)

- M: = Mantelfläche

## Patentansprüche

1. Luftfederanschlussvorrichtung (1) zur Lagerung eines Luftfederbeins an einem Fahrzeug, umfassend
- ein Luftfederstützlager (2) mit einer Kopflageraufnahme (5),
- ein Kopflager (3) mit wenigstens einer zylindrischen Mantelfläche (M),
- eine Kolbenstange (4), wobei die Kolbenstange (4) axial durch das Kopflager (3) hindurch geführt und gegenüber dem Kopflager (3) luftdicht abgedichtet ist,
wobei das Kopflager (3) in einer koaxial zu der Kolbenstange (4) angeordneten Kopflageraufnahme (5) des Luftfederstützlagers (2) angeordnet ist und zwischen der Kopflageraufnahme (5) des Luftfederstützlagers (2) und dem Kopflager (3) eine luftdichte Verbindung ausgebildet ist, wobei in dem Bereich der Kopflageraufnahme (5) zwischen dem Luftfederstützlager (2) und dem Kopflager (3) mindestens ein Pressverbindungselement (6) in direktem Kontakt mit der Kopflageraufnahme (5) des Luftfederstützlagers (2) und dem Kopflager (3) angeordnet ist und mindestens ein Dichtelement (7) angeordnet ist
**dadurch gekennzeichnet, dass**
das mindestens eine Dichtelement (7) eine stoffschlüssige Verbindung mit dem Kopflager (3) ausbildet und als eine oder mehrere Dichtlippe(n) des Kopflagers (3) ausgebildet ist/sind.

2. Luftfederanschlussvorrichtung (1) nach Anspruch 1, **dadurch gekennzeichnet, dass** das mindestens eine Pressverbindungselement (6) und/oder das mindestens eine Dichtelement (7) in dem Bereich der zylindrischen Mantelfläche (M) der Kopflageraufnahme (5) des Luftfederstützlagers (2) angeordnet ist/sind.

3. Luftfederanschlussvorrichtung (1) nach einem der Ansprüche 1 bis 2, **dadurch gekennzeichnet, dass** das mindestens eine Pressverbindungselement (6) mindestens eine Dichtelementaufnahme (8), insbesondere eine Dichtelementaussparung aufweist und das mindestens eine Dichtelement (7) an der mindestens einen Dichtelementaufnahme (8) angeordnet ist.

4. Luftfederanschlussvorrichtung (1) nach einem der Ansprüche 1 bis 3, **dadurch gekennzeichnet, dass** das mindestens eine Dichtelement (7) nicht in direktem Kontakt zu dem Kopflager (3) angeordnet ist.

5. Verfahren zum Herstellen einer Luftfederanschlussvorrichtung (1) zur Lagerung eines Luftfederbeins an einem Fahrzeug, umfassend die folgenden Schritte:
a) Bereitstellen eines Luftfederstützlagers (2) mit einer Kopflageraufnahme (5);
b) Bereitstellen eines Kopflagers (3) umfassend eine axial durch das Kopflager (3) hindurchgeführte und gegenüber dem Kopflager (3) luftdicht abgedichtete Kolbenstange (4), wobei das Kopflager (3) wenigstens eine zylindrische Mantelfläche (M) aufweist;
c) Verbinden des in Schritt b) bereitgestellten Kopflagers (3) mit dem in Schritt a) bereitgestellten Luftfederstützlager (2), wobei das Kopflager (3) in die Kopflageraufnahme (5) des Luftfederstützlagers (2) eingebracht wird und gegenüber dem Luftfederstützlager (2) luftdicht abgedichtet wird,
wobei in einem weiteren Schritt d) mindestens ein Pressverbindungselement (6) und
in einem weiteren Schritt e) mindestens ein Dichtelement (7) bereitgestellt werden und das Verbinden in Schritt c) mit dem in Schritt d) bereitgestellten mindestens einen Pressverbindungselement (6) durchgeführt wird und mit dem in Schritt e) bereitgestellten mindestens einen Dichtelement (7) luftdicht abgedichtet wird
**dadurch gekennzeichnet, dass**
das in Schritt e) bereitgestellte mindestens eine Dichtelement (7) als eine stoffschlüssige Verbindung mit dem Kopflager (3) ausgebildet wird, wobei das Kopflager (2) eine oder mehrere Dichtlippe(n) aufweist.

6. Verfahren zum Herstellen einer Luftfederanschlussvorrichtung (1) nach dem Anspruch 5, **dadurch gekennzeichnet, dass** das in Schritt d) bereitgestellte mindestens eine Pressverbindungselement (6) und/oder das in Schritt e) bereitgestellte mindestens eine Dichtelement (7) in dem Bereich der zylindrischen Mantelfläche (M) der Kopflageraufnahme (5) des Luftfederstützlagers (2) angeordnet wird/werden.

7. Verfahren zum Herstellen einer Luftfederanschlussvorrichtung (1) nach einem der Ansprüche 5 bis 6, **dadurch gekennzeichnet, dass** das in Schritt d) bereitgestellte mindestens eine Pressverbindungselement (6) mindestens eine Dichtelementaufnahme (8), insbesondere eine Dichtelementaussparung aufweist und das in Schritt e) bereitgestellte mindestens eine Dichtelement (7) an der mindestens einen Dichtelementaufnahme (8) angeordnet wird.

8. Verwendung einer Luftfederanschlussvorrichtung (1) nach einem der Ansprüche 1 bis 4 zur Lagerung eines Luftfederbeins an einem Fahrzeug, insbesondere als Schwingungsdämpfer, Niveauregler oder Kombination hiervon, umfassend
- ein Luftfederstützlager (2) mit einer Kopflageraufnahme (5),
- ein Kopflager (3) mit wenigstens einer zylindrischen Mantelfläche (M),
- eine Kolbenstange (4), wobei die Kolbenstange (4) axial durch das Kopflager (3) hindurch geführt und gegenüber dem Kopflager (3) luftdicht abgedichtet ist,
wobei das Kopflager (3) in einer koaxial zu der Kolbenstange (4) angeordneten Kopflageraufnahme (5) des Luftfederstützlagers (2) angeordnet ist und zwischen der Kopflageraufnahme (5) des Luftfederstützlagers (2) und dem Kopflager (3) eine luftdichte Verbindung ausgebildet ist, wobei in dem Bereich der Kopflageraufnahme (5) zwischen dem Luftfederstützlager (2) und dem Kopflager (3) mindestens ein Pressverbindungselement (6) in direktem Kontakt mit der Kopflageraufnahme (5) des Luftfederstützlagers (2) und dem Kopflager (3) angeordnet ist und mindestens ein Dichtelement (7) angeordnet ist.

## Claims

1. Air spring connecting device (1) for mounting an air spring strut on a vehicle, comprising
- an air spring support bearing (2) having a head bearing receiver (5),
- a head bearing (3) having at least one cylindrical outer surface (M),
- a piston rod (4), wherein the piston rod (4) is axially guided through the head bearing (3) and is sealed in an airtight manner relative to the head bearing (3),
wherein the head bearing (3) is arranged in a head bearing receiver (5) of the air spring support bearing (2) arranged coaxially relative to the piston rod (4) and an airtight connection is formed between the head bearing receiver (5) of the air spring support bearing (2) and the head bearing (3), wherein at least one press connection element (6) is arranged in direct contact with the head bearing receiver (5) of the air spring support bearing (2) and the head bearing (3), and at least one sealing element (7) is arranged, in the region of the head bearing receiver (5) between the air spring support bearing (2) and the head bearing (3),
**characterized in that**
the at least one sealing element (7) forms a substance-to-substance bond with the head bearing (3) and is/are configured as one or more sealing lip(s) of the head bearing (3).

2. Air spring connecting device (1) according to Claim 1, **characterized in that** the at least one press connection element (6) and/or the at least one sealing element (7) is/are arranged in the region of the cylindrical outer surface (M) of the head bearing receiver (5) of the air spring support bearing (2).

3. Air spring connecting device (1) according to one of Claims 1 to 2, **characterized in that** at least one press connection element (6) comprises at least one sealing element receiver (8), in particular a sealing element recess, and the at least one sealing element (7) is arranged on the at least one sealing element receiver (8) .

4. Air spring connecting device (1) according to one of Claims 1 to 3, **characterized in that** at least one sealing element (7) is not arranged in direct contact with the head bearing (3).

5. Method for producing an air spring connecting device (1) for mounting an air spring strut on a vehicle, comprising the following steps:
a) providing an air spring support bearing (2) having a head bearing receiver (5);
b) providing a head bearing (3) comprising a piston rod (4) which is axially guided through the head bearing (3) and sealed in an airtight manner relative to the head bearing (3), wherein the head bearing (3) comprises at least one cylindrical outer surface (M);
c) connecting the head bearing (3) provided in step b) with the air spring support bearing (2) provided in step a), wherein the head bearing (3) is introduced into the head bearing receiver (5) of the air spring support bearing (2) and is sealed in an airtight manner relative to the air spring support bearing (2),
wherein in a further step d) at least one press connection element (6) is provided
and
in a further step e) at least one sealing element (7) is provided and the connection is carried out in step c) by the at least one press connection element (6) provided in step d) and is sealed in an airtight manner by the at least one sealing element (7) provided in step e),
**characterized in that**
the at least one sealing element (7) provided in step e) is configured as a substance-to-substance bond with the head bearing (3), wherein the head bearing (2) comprises one or more sealing lip(s).

6. Method for producing an air spring connecting device (1) according to Claim 5, **characterized in that** the at least one press connection element (6) provided in step d) and/or the at least one sealing element (7) provided in step e) is/are arranged in the region of the cylindrical outer surface (M) of the head bearing receiver (5) of the air spring support bearing (2).

7. Method for producing an air spring connecting device (1) according to either of Claims 5 and 6, **characterized in that** the at least one press connection element (6) provided in step d) comprises at least one sealing element receiver (8), in particular a sealing element recess, and the at least one sealing element (7) provided in step e) is arranged on the at least one sealing element receiver (8).

8. Use of an air spring connecting device (1) according to one of Claims 1 to 4 for mounting an air spring strut on a vehicle, in particular as a vibration damper, level regulator or a combination thereof, comprising
- an air spring support bearing (2) having a head bearing receiver (5),
- a head bearing (3) having at least one cylindrical outer surface (M),
- a piston rod (4), wherein the piston rod (4) is axially guided through the head bearing (3) and is sealed in an airtight manner relative to the head bearing (3),
wherein the head bearing (3) is arranged in a head bearing receiver (5) of the air spring support bearing (2) arranged coaxially relative to the piston rod (4), and an airtight connection is formed between the head bearing receiver (5) of the air spring support bearing (2) and the head bearing (3), wherein at least one press connection element (6) is arranged in direct contact with the head bearing receiver (5) of the air spring support bearing (2) and the head bearing (3), and at least one sealing element (7) is arranged, in the region of the head bearing receiver (5) between the air spring support bearing (2) and the head bearing (3).

## Revendications

1. Dispositif de raccordement de ressort pneumatique (1) servant au montage d'une jambe de suspension pneumatique sur un véhicule, le dispositif comportant
- un palier de support de ressort pneumatique (2) comportant un logement de palier de tête (5),
- un palier de tête (3) doté d'au moins une surface d'enveloppe cylindrique (M),
- une tige de piston (4), dans lequel la tige de piston (4) est guidée axialement à travers le palier de tête (3) et est rendue étanche à l'air par rapport au palier de tête (3),
dans lequel le palier de tête (3) est disposé dans un logement de palier de tête (5), disposé coaxialement à la tige de piston (4), du palier de support de ressort pneumatique (2) et une liaison étanche à l'air est réalisée entre le logement de palier de tête (5) du palier de support de ressort pneumatique (2) et le palier de tête (3), dans lequel, dans la région du logement de palier de tête (5) entre le palier de support de ressort pneumatique (2) et le palier de tête (3), au moins un élément à ajustement serré (6) est disposé en contact direct avec le logement de palier de tête (5) du palier de support de ressort pneumatique (2) et le palier de tête (3) et au moins un élément d'étanchéité (7) est disposé,
**caractérisé en ce que**
ledit au moins un élément d'étanchéité (7) réalise une liaison de matière avec le palier de tête (3) et est réalisé sous la forme d'une ou plusieurs lèvres d'étanchéité du palier de tête (3).

2. Dispositif de raccordement de ressort pneumatique (1) selon la revendication 1, **caractérisé en ce que** ledit au moins un élément à ajustement serré (6) et/ou ledit au moins un élément d'étanchéité (7) est/sont disposé(s) dans la région de la surface d'enveloppe cylindrique (M) du logement de palier de tête (5) du palier de support de ressort pneumatique (2).

3. Dispositif de raccordement de ressort pneumatique (1) selon la revendication 1 ou 2, **caractérisé en ce que** ledit au moins un élément à ajustement serré (6) comprend au moins un logement d'élément d'étanchéité (8), en particulier un évidement d'élément d'étanchéité et ledit au moins un élément d'étanchéité (7) est disposé sur ledit au moins un logement d'élément d'étanchéité (8).

4. Dispositif de raccordement de ressort pneumatique (1) selon l'une des revendications 1 à 3, **caractérisé en ce que** ledit au moins un élément d'étanchéité (7) n'est pas disposé en contact direct avec le palier de tête (3).

5. Procédé de fabrication d'un dispositif de raccordement de ressort pneumatique (1) servant au montage d'une jambe de suspension pneumatique sur un véhicule, comportant les étapes suivantes :
a) fourniture d'un palier de support de ressort pneumatique (2) comportant un logement de palier de tête (5) ;
b) fourniture d'un palier de tête (3) comportant une tige de piston (4) guidée axialement à travers le palier de tête (3) et rendue étanche à l'air par rapport au palier de tête (3), le palier de tête (3) comprenant au moins une surface d'enveloppe cylindrique (M) ;
c) liaison du palier de tête (3) fourni à l'étape b) au palier de support de ressort pneumatique (2) fourni à l'étape a), le palier de tête (3) étant introduit dans le logement de palier de tête (5) du palier de support de ressort pneumatique (2) et rendu étanche à l'air par rapport au palier de support de ressort pneumatique (2),
au moins un élément à ajustement serré (6) étant fourni dans une autre étape d) et
au moins un élément d'étanchéité (7) étant fourni dans une autre étape e) et la liaison à l'étape c) audit au moins un élément à ajustement serré (6) fourni à l'étape d) étant effectuée et étant rendue étanche à l'air à l'aide dudit au moins un élément d'étanchéité (7) fourni à l'étape e),
**caractérisé en ce que**
ledit au moins un élément d'étanchéité (7) fourni à l'étape e) est réalisé en tant que liaison de matière au palier de tête (3), le palier de tête (2) comprenant une ou plusieurs lèvres d'étanchéité.

6. Procédé de fabrication d'un dispositif de raccordement de ressort pneumatique (1) selon la revendication 5, **caractérisé en ce que** ledit au moins un élément à ajustement serré (6) fourni à l'étape d) et/ou ledit au moins un élément d'étanchéité (7) fourni à l'étape e) est/sont disposé(s) dans la région de la surface d'enveloppe cylindrique (M) du logement de palier de tête (5) du palier de support de ressort pneumatique (2) .

7. Procédé de fabrication d'un dispositif de raccordement de ressort pneumatique (1) selon la revendication 5 ou 6, **caractérisé en ce que** ledit au moins un élément à ajustement serré (6) fourni à l'étape d) comprend au moins un logement d'élément d'étanchéité (8), en particulier un évidement d'élément d'étanchéité, et ledit au moins un élément d'étanchéité (7) fourni à l'étape e) est disposé sur ledit au moins un logement d'élément d'étanchéité (8).

8. Utilisation d'un dispositif de raccordement de ressort pneumatique (1) selon l'une des revendications 1 à 4 pour le montage d'une jambe de suspension pneumatique sur un véhicule, en particulier sous forme d'amortisseur de vibrations, de dispositif de régulation de niveau ou de combinaison de ceux-ci, comportant
- un palier de support de ressort pneumatique (2) comportant un logement de palier de tête (5),
- un palier de tête (3) doté d'au moins une surface d'enveloppe cylindrique (M),
- une tige de piston (4), dans laquelle la tige de piston (4) est guidée axialement à travers le palier de tête (3) et est rendue étanche à l'air par rapport au palier de tête (3),
dans laquelle le palier de tête (3) est disposé dans un logement de palier de tête (5), disposé coaxialement à la tige de piston (4), du palier de support de ressort pneumatique (2) et une liaison étanche à l'air est réalisée entre le logement de palier de tête (5) du palier de support de ressort pneumatique (2) et le palier de tête (3), dans laquelle, dans la région du logement de palier de tête (5) entre le palier de support de ressort pneumatique (2) et le palier de tête (3), au moins un élément à ajustement serré (6) est disposé en contact direct avec le logement de palier de tête (5) du palier de support de ressort pneumatique (2) et le palier de tête (3) et au moins un élément d'étanchéité (7) est disposé.
